# NEUE EUROPÄISCHE PATENTSCHRIFT

(11) **EP 1 360 068 B2**
(45) Veröffentlichungstag und Bekanntmachung des Hinweises auf die Entscheidung über den Einspruch: **07.09.2011**
(45) Hinweis auf die Patenterteilung: 18.08.2004
(21) Anmeldenummer: 02718027.2
(22) Anmeldetag: 16.01.2002
(51) Int. Cl.: B32B 11/00

(54) **VERBUNDELEMENTE ENTHALTEND BITUMEN**
BITUMINOUS COMPOSITE ELEMENTS
ELEMENTS COMPOSITES CONTENANT DES BITUMES

(30) Priorität: 18.01.2001 DE 10102091
(43) Veröffentlichungstag der Anmeldung: 12.11.2003
(73) Patentinhaber: BASF SE, 67056 Ludwigshafen (DE)
(72) Erfinder: DIERSSEN, Jens, 85235 Odelzhausen (DE)
(86) Internationale Anmeldenummer: PCT/EP2002/000368
(87) Internationale Veröffentlichungsnummer: WO 2002/057074

(56) Entgegenhaltungen:
- DE-A- 3 413 878
- DE-A- 19 716 544
- DE-A- 19 835 727
- GB-A- 1 550 616
- GB-A- 2 105 256
- US-A- 4 374 687
- US-A- 6 110 846
- DATABASE WPI Section Ch, Week 198632 Derwent Publications Ltd., London, GB; Class A94, AN 1986-208749 XP002202116 & JP 61 141544 A (NIPPON SEKISO KOGYO KK), 28. Juni 1986 (1986-06-28)
- MARINE BULLETIN: 'A new concept for a new age - the Sandwich Plate Sytem (SPS) for shipbuilding' LLOYD'S REGISTER SPECIAL REPORT September 2000, LONDON,
- 'The Shell Bitumen Industrial Handbook', 1995

## Beschreibung

Die Erfindung betrifft Verbundelemente, die folgende Schichtstruktur aufweisen:
(i) 2 mm bis 20 mm, bevorzugt 3 mm bis 10 mm, besonders bevorzugt 5 mm bis 10 mm Metall, Holz oder Kunststoff, beispielsweise Polyethylen, Polypropylen, ABS, thermoplastisches Polyurethan, ASA oder PVC, bevorzugt Metall,
(ii) 10 mm bis 300 mm, bevorzugt 10 mm bis 100 mm Mischung enthaltend Bitumen, nach DIN 55946 Teil 1 mit einer Nadelpenetration nach DIN 52010 zwischen 0,1 und 80 mm,
(iii) 2 mm bis 20 mm, bevorzugt 3 mm bis 10 mm, besonders bevorzugt 5 mm bis 10 mm Metall, Holz oder Kunststoff, beispielsweise Polyethylen, Polypropylen, ABS, thermoplastisches Polyurethan, ASA oder PVC, bevorzugt Metall.

Des weiteren bezieht sich die Erfindung auf Verfahren zur Herstellung dieser Verbundelemente und deren Verwendung.

Für Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff, üblicherweise Polyisocyanat-Polyadditionsprodukte, beinhalten. Durch die Haftung des Kunststoffs an den zwei Metallschichten entstehen Verbundelemente mit außerordentlichen Vorteilen gegenüber bekannten Stahl Konstruktionen. Allgemein sind SPS-Elemente bekannt aus den Schriften US 6 050 208, US 5 778 813, DE-A 198 25 083, DE-A 198 25 085, DE-A 198 25 084, DE-A 198 25 087 und DE-A 198 35 727.

Eine wichtiger Charakteristik des Kunststoffelastomers im SPS sind seine Eigenschaften bei hohen Temperaturen, seine Verarbeitbarkeit und seine Wirtschaftlichkeit.

Der vorliegenden Erfindung lag daher die Aufgabe zugrunde, neue Verbundelemente zu entwickeln, die über eine gute Wärmebeständigkeit verfügen, sich gut verarbeiten und montieren lassen sowie kostengünstig herzustellen sind.

Diese Aufgabe wurde erfindungsgemäß durch die eingangs beschriebenen Verbundelemente gelöst.

Unter dem in dieser Schrift verwendeten Begriff "Bitumen" ist ein bei der Aufarbeitung von Rohöl gewonnenes schwerflüchtiges Gemisch verschiedener organischer Substanzen zu verstehen, dessen viskoelastisches Verhalten sich mit der Temperatur ändert. Definitionen für Bitumen werden des weiteren gegeben im Römpp Chemie Lexikon, 9. Korrigierte Auflage, Georg Thieme Verlag, Stuttgart, New York und insbesondere in der DIN 55946 Teil 1, die im Zweifelsfall maßgeblich ist. Bitumen sind allgemein bekannt und in unterschiedlichen Ausführungsformen kommerziell erhältlich. Informationen über Bitumen, die verschiedenen Ausführungsformen, Additive, die Verarbeitung und Handhabung sind beispielsweise in "Shell Bitumen für den Straßenbau und andere Anwendungsgebiete", 7. Auflage, 1994, Deutsche Shell Aktiengesellschaft, Hamburg sowie "The Shell Bitumen Industrial Handbook" publiziert von Shell Bitumen, Chertsey, Surrey, Groß Britannien, 1995 (ISBN-0-95 16625-1-1) gegeben.

Grundsätzlich sind für die erfindungsgemäße Anwendung in den Verbundelementen alle Arten von Bitumen nach DIN 55946 Teil 1 mit einer Nadelpenetration nach DIN 52010 zwischen 0,1 und 80 mm, einsetzbar. Im Hinblick auf die unterschiedlichen Anwendungen und möglichen Herstellverfahren für die Verbundelementen kann es vorteilhaft sein, aus den bekannten und charakterisierten Bitumen Produkte einzusetzen, die im Hinblick auf die Erweichungstemperatur, die Viskosität bei der Verarbeitungstemperatur, die Haftung an die Schichten (i) und (iii) sowie die elastischen Eigenschaften besondere Vorteile bieten. Diese Auswahl oder die mögliche Anpassung von Bitumen oder Bitumenmischungen ist dem Fachmann auf dem Gebiet Bitumen geläufig. So kann es vorteilhaft sein, für Verbundelemente, die einer besonders hohen Temperaturbelastung ausgesetzt sind, Bitumen zu verwenden, die eine hohe Erweichungstemperatur aufweisen.

Als (ii) Bitumen wird ein Bitumen nach DIN 55946 Teil 1 mit einer Nadelpenetration nach DIN 52010 zwischen 0,1 und 80 mm eingesetzt.

Bevorzugt sind des weiteren Verbundelemente enthaltend Bitumen mit einem Erweichungspunkt nach DIN 52011 von mindestens 50°C, bevorzugt mindestens 80°C.

Außerdem sind Verbundelemente enthaltend Bitumen mit einem Gehalt an Asphaltenen von 8 bis 30 Gew.-% bevorzugt.

Bevorzugt sind zudem Verbundelemente enthaltend Oxidationsbitumen. Dieses Oxidationsbitumen kann nach bekannten Verfahren hergestellt werden und ist kommerziell erhältlich.

Bevorzugt können die Verbundelemente als Schicht (ii) zwischen den Schichten (i) und (iii) Bitumen in Mischung mit anorganischen Füllstoffen und/oder Kunststoffen enthalten. Die Vorteile entsprechender Zusätze auf die Eigenschaften der Bitumenmischung sind allgemein bekannt und vielfältig beschrieben. Entsprechend kann der Fachmann anhand der bekannten Eigenschaften der Mischungen für die unterschiedlichsten Anwendungen der Verbundelementen, beispielsweise je nach mechanischer oder thermischer Belastung eine vorteilhafte Abmischung einsetzen.

Bevorzugt kann als (ii) Bitumen in Mischung mit SBS (Styrol-Butadien-Styrol), SBR (Styrol-Butadien-Rubber), SIS (Styrol-Isopren-Styrol), EPDM (Ethylen-Propylen-Dien-Kautschuk), Ethylenbutylacrylat, Ethylenvinylacetat (EVA), Ethylenmethylacrylat und/oder Polyolefinen, beispielsweise Polyethylen, Polypropylen, Ethylen-Propylen-Copolymere eingesetzt werden. Bitumen in Mischung mit diesen Kunststoffen sind vielfältig beschrieben und dem Fachmann allgemein geläufig. Geeignete Kunststoffe als Additive werden z.B. von Elenac GmbH, Deutschland unter der Marke Lucobit® vertrieben. Die Kunststoffe, insbesondere die Polyolefine weisen bevorzugt ein zahlenmittleres Molekulargewicht von 20000 bis 1000000 g/mol auf. Der Gehalt an Kunststoffen in der Mischung mit Bitumen kann üblicherweise 0 bis 30 Gew.-%, bevorzugt 0 bis 13 Gew.-%, jeweils bezogen auf das Gesamtgewicht von (ii) betragen.

Unter dem Ausdruck "anorganische Füllstoffe" sind beispielsweise Gips, Bariumsulfat, Sand, Zement und/oder Steinmehl zu verstehen. Diese anorganischen Zusätze sind als Zusätze zu Bitumen allgemein bekannt und vielfältig beschrieben. Diese anorganischen Additive weisen üblicherweise eine Korngröße von 1 bis 75 µm auf, im Falle von Sand üblicherweise zwischen 0,08 mm und 2 mm. Es können gegebenenfalls aber auch größere Partikel eingesetzt werden, beispielsweise für diesen Zweck bekannter Split mit einer Korngröße von mindestens 4 mm, bevorzugt 4 mm bis 10 mm. Der Gehalt an anorganischen Füllstoffen in der Mischung mit Bitumen kann üblicherweise 0 bis 90 Gew.-%, bevorzugt 0 bis 50 Gew.-%, jeweils bezogen auf das Gesamtgewicht von (ii) betragen.

Zusätzlich zu den angegebenen Additiven zum Bitumen können auch allgemein für diesen Zweck bekannte Fasern, beispielsweise Glasfaser, Cellulose und/oder Steinwolle, und/oder weitere bekannte Additive, beispielsweise Farbstoffe, Öle, Wachse oder Fette eingesetzt werden.

Mögliche Additive und deren Verarbeitung mit Bitumen sind beispielhaft beschrieben in DE-A 199 03 314, EP-A 1 008 630 und US 6 133 350.

Üblicherweise erfolgt die Mischung von Bitumen mit den angegebenen möglichen weiteren Bestandteilen bei einer Temperatur von zwischen 140 und 240 °C, wobei diese Temperatur bevorzugt in Abhängigkeit von dem eingesetzten Bitumen und den gewünschten Additiven gewählt wird. Je nach Additiv kann das Vermischen nach allgemein bekannten Verfahren erfolgen.

Mischungen von Bitumen und den angegebenen Additiven sind vielfältig beschrieben und in unterschiedlichsten Ausführungsformen kommerziell erhältlich.

Bevorzugt sind Verbundelemente, die folgende Schichtstruktur aufweisen:
(i) 2 mm bis 20 mm, bevorzugt 3 mm bis 10 mm, besonders bevorzugt 5 mm bis 10 mm Metall,
(ii) 10 mm bis 300 mm, bevorzugt 10 bis 100 mm Bitumen,
(iii) 2 mm bis 20 mm, bevorzugt 3 mm bis 10 mm, besonders bevorzugt 5 mm bis 10 mm Metall.

Bei dieser bevorzugten Ausführungsart sind unter dem Ausdruck "Bitumen nach DIN 55946 Teil 1 mit einer Nadelpenetration nach DIN 52010 zwischen 0,1 und 80 mm", auch Mischungen enthaltend Bitumen sowie weitere, in Mischung mit Bitumen allgemein bekannte Bestandteile, beispielsweise die eingangs dargestellten Additive, zu verstehen.

Die Herstellung der erfindungsgemäßen Verbundelemente kann dadurch erfolgen, dass man zwischen die Schichten (i) und (iii) eine Mischung enthaltend Bitumen, üblicherweise in erweichtem oder geschmolzenem Zustand, bevorzugt bei einer Temperatur vom Bitumen von 140 bis 240°C, einbringt. Um einer unerwünscht vorzeitigen Abkühlung und damit Erstarrung vom Bitumen zwischen (i) und (iii), bevor der gesamte zu auszufüllende Raum zwischen (i) und (iii) gefüllt ist, vorzubeugen, kann es sich als vorteilhaft erweisen, die Schichten (i) und (iii) vor und/oder während dem Einbringen vom Bitumen zu erwärmen, bevorzugt auf eine Temperatur von 40 bis 240°C, besonders bevorzugt 60 bis 150°C. Dies gilt insbesondere wenn die Schichten (i) und (iii) aus Metall bestehen, d.h. Metalle eine hohe Wärmekapazität besitzen und im kalten Zustand das heiße Bitumen schnell abkühlen könnten.

Beispielsweise kann die Herstellung der Verbundelemente in einer geschlossenen Form durchgeführt werden, d.h. (i) und (iii) befinden sich bei der Befüllung mit (ii) in einer Form, die nach der vollständigen Eintragung von (ii) verschlossen wird. Nach dem Erstarren von (ii) kann das Verbundelement entformt werden.

(i) und (iii) können beispielsweise in geeigneter Anordnung, beispielsweise parallel zueinander, fixiert werden. Der Abstand wird üblicherweise so gewählt, dass der Raum zwischen (i) und (iii) eine Dicke von 10 bis 300 mm aufweist. Die Fixierung von (i) und (iii) kann beispielsweise durch Abstandshalter erfolgen. Die Ränder des Zwischenraumes können bevorzugt derart abgedichtet werden, dass der Raum zwischen (i) und (iii) zwar mit (ii) gefüllt werden kann, ein Herausfließen dieser Komponenten aber verhindert wird. Das Abdichten kann mit üblichen Kunststoff- oder Metallfolien und/oder Metallplatten, die auch als Abstandshalter dienen können, erfolgen.

Die Befüllung des Raumes zwischen (i) und (iii) mit (ii) kann sowohl in vertikaler Ausrichtung von (i) und (iii), als auch in horizontaler Ausrichtung von (i) und (iii) erfolgen.

Das Befüllen des Raumes zwischen (i) und (iii) mit (ii) kann mit üblichen Förder- oder Gießeinrichtungen für heißes Bitumen, bevorzugt kontinuierlich, durchgeführt werden. Je nach Viskosität von (ii) beim Befüllen kann (ii) einfach vergossen oder aber unter Druck eingepreßt werden. Bevorzugt ist die vollständige Befüllung des Raumes zwischen (i) und (iii) abgeschlossen, bevor (ii) erstarrt.

Ein weiteres Verfahren zur Herstellung der Verbundelemente besteht darin, dass man (ii) in geschmolzenem oder erweichtem Zustand auf die Oberfläche von (i) aufträgt und anschließend (iii) auf dem geschmolzenem oder erweichtem (ii) fixiert. Beispielsweise kann auf (i) die Mischung enthaltend Bitumen in geschmolzenem oder erweichtem Zustand kalandriert, gespachtelt oder gestrichen werden. Anschließend kann die Schicht (iii) in Kontakt mit (ii) gebracht und bevorzugt bis zur Erstarrung von (ii) in der gewünschten Position fixiert werden. Bei der Auftragung von (ii) auf (i) kann bevorzugt eine in der Dicke gleichmäßige Schicht (ii) angestrebt werden, wobei sich Dicke nach den gewünschten Abmessungen des Verbundelementes richtet. Überschüssiges Bitumen kann am Rand oder an vorbereiteten Öffnungen in (i) und/oder (iii) abfließen oder herausgepresst werden.

Alternativ kann eine Schicht (ii) vorgefertigt und beispielsweise im festen Zustand mit (i) und (iii) verklebt werden. Dieses Verfahren, bei dem man (ii) mit (i) und (iii) verklebt, kann mittels allgemein für diese Materialien bekannten Klebstoffen durchgeführt werden. Ein Auswahl geeigneter Klebstoffe kann der Fachmann mittels einfacher Routineexperimente ermitteln.

Bevorzugt kann man die Oberflächen von (i) und/oder (iii), an die (ii) nach der Herstellung der Verbundelemente haftet, mit Sand oder Stahlkugeln bestrahlen. Dieses Sandstrahlen kann nach üblichen Verfahren erfolgen. Beispielsweise kann man die Oberflächen unter hohem Druck mit üblichem Sand bestrahlen und damit beispielsweise reinigen und Aufrauhen. Geeignete Apparaturen für eine solche Behandlung sind kommerziell erhältlich.

Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Sandstrahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Ölen und Fetten oder allgemein als Formtrennmitteln bekannten Stoffen.

Als Schichten (i) und (iii), üblicherweise Platten, können bevorzugt übliche Metalle verwendet werden, beispielsweise Eisen, üblicher Stahl, alle Arten von veredeltem Stahl, Aluminium und/oder Kupfer.

Sowohl (i) als auch (iii) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Die erfindungsgemäßen Verbundelemente finden Verwendung vor allem in Bereichen, in denen Konstruktionselemente benötigt werden, die großen Kräften standhalten, beispielsweise als Konstruktionsteile im Schiffbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Vorteile der erfindungsgemäßen Verbundelemente gegenüber bekannten Verbundelementen für gleiche Anwendungen sind in der thermischen Beständigkeit von geeigneten Bitumen, in der einfachen Handhabung auch bei der Montage der Verbundelemente und in der Wirtschaftlichkeit bei der Herstellung zu finden.

## Patentansprüche

1. Verbundelemente, die folgende Schichtstruktur aufweisen:
(i) 2 bis 20 mm Metall, Kunststoff oder Holz,
(ii) 10 bis 300 mm Mischung enthaltend Bitumen nach DIN 55946 Teil 1 mit einer Nadelpenetration nach DIN 52010 zwischen 0,1 und 80 mm,
(iii) 2 bis 20 mm Metall, Kunststoff oder Holz.

2. Verbundelemente nach Anspruch 1 enthaltend als (ii) Bitumen in Mischung mit anorganischen Füllstoffen und/oder Kunststoffen.

3. Verbundelemente nach Anspruch 1 enthaltend als (ii) Bitumen in Mischung mit SBS, SBR, SIS, EPDM, Polyolefinen, Ethylenbutylacrylat, Ethylenvinylacetat und/oder Ethylenmethylacrylat.

4. Verbundelemente nach Anspruch 1 enthaltend Bitumen mit einem Erweichungspunkt nach DIN 52011 von mindestens 50°C.

5. Verbundelemente nach Anspruch 1 enthaltend Bitumen mit einem Gehalt an Asphaltenen von 8 bis 30 %.

6. Verbundelemente nach Anspruch 1 enthaltend Oxidationsbitumen.

7. Verfahren zur Herstellung von Verbundelementen gemäß Anspruch 1 **dadurch gekennzeichnet, dass** man zwischen die Schichten (i) und (iii) eine Mischung enthaltend Bitumen in geschmolzenen oder erweichtem Zustand einbringt.

8. Verfahren zur Herstellung von Verbundelementen gemäß Anspruch 1, **dadurch gekennzeichnet, dass** man (ii) in geschmolzenem oder erweichtem Zustand auf die Oberfläche von (i) aufträgt und anschließend (iii) auf dem geschmolzenem oder erweichtem (ii) fixiert.

9. Verfahren zur Herstellung von Verbundelementen gemäß Anspruch 1, **dadurch gekennzeichnet, dass** man (ii) mit (i) und (iii) verklebt.

10. Schiffe oder Bauwerke enthaltend Verbundelemente nach einem der Ansprüche 1 bis 6.

## Claims

1. A composite element which has the following layer structure:
(i) from 2 to 20 mm of metal, plastic or wood,
(ii) from 10 to 300 mm of mixture comprising bitumen to DIN 55 946 Part 1 with needle penetration to DIN 52 010 of from 0.1 to 80 mm,
(iii) from 2 to 20 mm of metal, plastic or wood.

2. The composite element according to claim 1 comprising, as (ii), bitumen in a mixture with inorganic fillers and/or with plastics.

3. The composite element according to claim 1, comprising, as (ii), bitumen in a mixture with SBS, SBR, SIS, EPDM, polyolefins, ethylene-butyl acrylate, ethylene-vinyl acetate and/or ethylene-methyl acrylate.

4. The composite element according to claim 1, comprising bitumen with a softening point to DIN 52011 of at least 50°C.

5. The composite element according to claim 1, comprising bitumen with a content of from 8 to 30% of asphaltenes.

6. The composite element according to claim 1, comprising oxidized bitumen.

7. A process for producing composite elements according to claim 1, which comprises introducing a mixture comprising molten or softened bitumen between the layers (i) and (iii).

8. A process for producing composite elements according to claim 1, which comprises applying molten or softened (ii) to the surface of (i) and then securing (iii) to the molten or softened (ii).

9. A process for producing composite elements according to claim 1, which comprises adhesively bonding (ii) to (i) and (iii).

10. A ship or an item of civil engineeering work comprising composite elements according to any of claims 1 to 6.

## Revendications

1. Éléments composites qui présentent la structure stratifiée ci-après :
(i) un métal, une matière synthétique ou du bois, sur une épaisseur de 2 à 20 mm,
(ii) un mélange contenant du bitume selon la norme DIN 55 946 partie 1 avec une pénétrabilité à l'aiguille, selon la norme DIN 52 010, entre 0,1 et 80 mm, sur une épaisseur de 10 à 300 mm,
(iii) un métal, une matière synthétique ou du bois, sur une épaisseur de 2 à 20 mm.

2. Éléments composites selon la revendication 1, contenant, à titre de (ii), du bitume en mélange avec des matières de charge inorganiques et/ou des matières synthétiques.

3. Éléments composites selon la revendication 1, contenant, à titre de (ii), du bitume en mélange avec du SBS, du SBR, du SIS, du EPDM, des polyoléfines, de l'éthylène-acrylate de butyle, de l'éthylène-acétate de vinyle et/ou de l'éthylène-acrylate de méthyle.

4. Éléments composites selon la revendication 1, contenant du bitume possédant un point de ramollissement, selon la norme DIN 52 011, d'au moins 50°C.

5. Éléments composites selon la revendication 1, contenant du bitume possédant une teneur en asphaltènes de 8 à 30 %.

6. Éléments composites selon la revendication 1, contenant du bitume d'oxydation.

7. Procédé pour la fabrication d'éléments composites selon la revendication 1, **caractérisé en ce qu'**on introduit, entre les couches (i) et (iii), un mélange contenant du bitume en fusion ou à l'état ramolli.

8. Procédé pour la fabrication d'éléments composites selon la revendication 1, **caractérisé en ce qu'**on applique (ii) en fusion ou à l'état ramolli sur la surface de (i) et on fixe ensuite (iii) sur (ii) en fusion ou à l'état ramolli.

9. Procédé pour la fabrication d'éléments composites selon la revendication 1, **caractérisé en ce qu'**on colle (ii) avec (i) et avec (iii).

10. Bateaux ou constructions contenant des éléments composites selon l'une quelconque des revendications 1 à 6.
